# EUROPEAN PATENT APPLICATION

(11) **EP 2 408 182 A1**
(43) Date of publication of application: **18.01.2012**
(21) Application number: 11173384.6
(22) Date of filing: 11.07.2011
(51) Int. Cl.: H04M 1/725, H04L 29/08, H04L 29/06

(54) **Portable terminal and portable terminal-electronic apparatus associating method**

(30) Priority: 12.07.2010 JP 2010157413
(71) Applicant: Funai Electric Co., Ltd., Daito-shi, Osaka 574-0013 (JP)
(72) Inventor: Wakabayashi, Naoyuki, Daito-shi, Osaka 574-0013 (JP); Nishigori, Yoshihisa, Daito-shi, Osaka 574-0013 (JP)
(74) Representative: Grünecker, Kinkeldey, Stockmair & Schwanhäusser

(57) **Abstract**

This portable terminal (10) includes a transmission portion (12) capable of transmitting an information disclosure request signal for making an electronic apparatus (20) disclose apparatus specifying information for specifying the electronic apparatus to the electronic apparatus, a communication portion (13) formed to be capable of acquiring the apparatus specifying information disclosed by the electronic apparatus and a control portion (14) associating a portable terminal body portion (11) and the electronic apparatus with each other on the basis of the apparatus specifying information acquired by the communication portion.

## Description

### BACKGROUND OF THE INVENTION

### Field of the Invention

The present invention relates to a portable terminal and a portable terminal-electronic apparatus associating method, and more particularly, it relates to a portable terminal including a transmission portion capable of transmitting a signal to an electronic apparatus and a portable terminal-electronic apparatus associating method.

### Description of the Background Art

A portable terminal including a transmission portion capable of transmitting a signal to an electronic apparatus is known in general, as disclosed in Japanese Patent Laying-Open No. 2000-148169, for example.

The aforementioned Japanese Patent Laying-Open No. 2000-148169 discloses a portable telephone (portable terminal) including a remote control means (transmission portion) transmitting a signal to a karaoke terminal (electronic apparatus). This portable telephone is conceivably so formed that the user can use the same as a remote control for the karaoke terminal by previously registering information (maker code, for example) for specifying the karaoke terminal in the portable telephone and previously associating a portable telephone body (portable terminal body portion) and the karaoke terminal with each other.

In order to use the portable telephone disclosed in the aforementioned Japanese Patent Laying-Open No. 2000-148169 as a remote control for an unspecific electronic apparatus other than the karaoke terminal previously registered in the portable telephone, however, the user must conceivably manually retrieve information (maker code, for example) for specifying the electronic apparatus and register the same in the portable telephone, in order to associate the portable telephone body and the electronic apparatus with each other. In the portable telephone disclosed in the aforementioned Japanese Patent Laying-Open No. 2000-148169, therefore, the user is disadvantageously burdened with a complicated operation when associating the portable telephone body and the electronic apparatus with each other.

### SUMMARY OF THE INVENTION

The present invention has been proposed in order to solve the aforementioned problem, and an object of the present invention is to provide a portable terminal and a portable terminal-electronic apparatus associating method each capable of releasing the user from a burden when associating a portable terminal body portion and an electronic apparatus with each other.

A portable terminal according to a first aspect of the present invention includes a portable terminal body portion, a transmission portion capable of transmitting an information disclosure request signal for making an electronic apparatus connected to a network disclose apparatus specifying information for specifying the electronic apparatus on the network to the electronic apparatus, a communication portion formed to be connectable to the network through a portable telephone network and formed to be capable of acquiring the apparatus specifying information disclosed by the electronic apparatus and a control portion associating the portable terminal body portion and the electronic apparatus with each other on the basis of the apparatus specifying information acquired by the communication portion.

As hereinabove described, the portable terminal according to the first aspect includes the transmission portion capable of transmitting the information disclosure request signal for making the electronic apparatus disclose the apparatus specifying information, the communication portion formed to be capable of acquiring the apparatus specifying information disclosed by the electronic apparatus and the control portion associating the portable terminal body portion and the electronic apparatus with each other on the basis of the apparatus specifying information acquired by the communication portion. Thus, the communication portion acquires the apparatus specifying information of the electronic apparatus when the transmission portion transmits the information disclosure request signal to the electronic apparatus on the basis of a transmission operation of the user, whereby the control portion can associate the portable terminal body portion and the electronic apparatus with each other without requiring the user to manually retrieve the apparatus specifying information of the electronic apparatus. Consequently, the user can be released from a burden when the control portion associates the portable terminal body portion and the electronic apparatus with each other.

The aforementioned portable terminal according to the first aspect is preferably so formed that the user can operate the electronic apparatus with the portable terminal body portion when the control portion associates the portable terminal body portion and the electronic apparatus with each other. According to this structure, the user can be released from a burden when implementing an operation of the electronic apparatus with the portable terminal body portion.

In this case, the control portion is preferably formed to generate an operation signal including an operation instruction to the electronic apparatus corresponding to the apparatus specifying information on the basis of the apparatus specifying information acquired by the communication portion. According to this structure, the control portion can easily generate the operation signal for operating the electronic apparatus on the basis of the apparatus specifying information acquired by the communication portion.

In the aforementioned portable terminal having the control portion generating the operation signal, the communication portion is preferably formed to also acquire information related to an operation on the electronic apparatus corresponding to the apparatus specifying information when acquiring the apparatus specifying information, and the control portion is preferably formed to generate the operation signal for the electronic apparatus corresponding to the apparatus specifying information on the basis of the apparatus specifying information acquired by the communication portion and the information related to the operation on the electronic apparatus corresponding to the apparatus specifying information. According to this structure, the control portion can more easily generate the operation signal for operating the electronic apparatus on the basis of the apparatus specifying information acquired by the communication portion and the information related to the operation on the electronic apparatus corresponding to the apparatus specifying information.

In this case, the communication portion is preferably connected to an operation information server storing a database for associating the apparatus specifying information and the information related to the operation on the electronic apparatus with each other. According to this structure, the communication portion can easily acquire the apparatus specifying information and the information related to the operation on the electronic apparatus corresponding to the apparatus specifying information from the operation information server.

In the aforementioned portable terminal according to the first aspect, the communication portion is preferably connected to a contents server distributing contents via the network through the portable telephone network and formed to receive the contents from the contents server, and the portable terminal is preferably so formed that the electronic apparatus can receive the same contents as the contents received by the communication portion when the control portion associates the portable terminal body portion and the electronic apparatus with each other. If the user must be authenticated by the contents server in order to receive contents and is authenticated only on the side of the portable terminal, he/she must be newly authenticated for receiving the contents on the side of the electronic apparatus, in order to receive the contents with the electronic apparatus. According to the present invention, on the other hand, the control portion so associates the portable terminal body portion and the electronic apparatus with each other that the user can receive the contents with the electronic apparatus without being newly authenticated for receiving the contents on the side of the electronic apparatus.

In this case, the transmission portion is preferably formed to also transmit prescribed authentication information necessary for receiving the contents from the contents server to the electronic apparatus when transmitting the information disclosure request signal to the electronic apparatus. According to this structure, the electronic apparatus can easily receive the contents from the contents server with the prescribed authentication information received from the portable terminal.

The aforementioned portable terminal according to the first aspect preferably further includes a payment means for making payment through the network, and is so formed that the user can pay for a product purchased or a service utilized with the electronic apparatus through the network with the payment means when the control portion associates the portable terminal body portion and the electronic apparatus with each other. If the user can pay for the product purchased or the service utilized with the electronic apparatus only with the electronic apparatus, he/she must make the payment with the electronic apparatus employed for purchasing the product or utilizing the service. According to the present invention, on the other hand, the control portion so associates the portable terminal body portion and the electronic apparatus with ach other that the user can make the payment with the portable terminal without using the electronic apparatus employed for purchasing the product or utilizing the service.

In this case, the communication portion is preferably formed to also acquire prescribed payment information related to payment for the product purchased or the service utilized with the electronic apparatus through the network when acquiring the apparatus specifying information. According to this structure, the portable terminal can easily make the payment for the product purchased or the service utilized with the electronic apparatus through the network by employing the prescribed payment information acquired from the electronic apparatus.

In the aforementioned portable terminal according to the first aspect, the information disclosure request signal preferably includes terminal specifying information for specifying the portable terminal body portion. According to this structure, the electronic apparatus can easily disclose the apparatus specifying information on the network toward the portable terminal body portion specified by the terminal specifying information included in the information disclosure request signal. Thus, the portable terminal can easily acquire the apparatus specifying information disclosed by the electronic apparatus on the network through the communication portion. Consequently, the control portion can easily associate the portable terminal body portion and the electronic apparatus with each other.

A portable terminal-electronic apparatus associating method according to a second aspect of the present invention includes the steps of transmitting an information disclosure request signal for making an electronic apparatus connected to a network disclosed apparatus specifying information for specifying the electronic apparatus on the network to the electronic apparatus with a portable terminal, acquiring the apparatus specifying information disclosed by the electronic apparatus with the portable terminal through the network and a portable telephone network and associating the portable terminal and the electronic apparatus with each other on the basis of the apparatus specifying information acquired with the portable terminal.

As hereinabove described, the portable terminal-electronic apparatus associating method according to the second aspect includes the steps of transmitting the information disclosure request signal for making the electronic apparatus disclose the apparatus specifying information to the electronic apparatus with the portable terminal, acquiring the apparatus specifying information disclosed by the electronic apparatus with the portable terminal and associating the portable terminal and the electronic apparatus with each other on the basis of the apparatus specifying information acquired with the portable terminal. Thus, the user can acquire the apparatus specifying information of the electronic apparatus with the portable terminal by operating the portable terminal and transmitting the information disclosure request signal to the electronic apparatus, whereby he/she can associate the portable terminal and the electronic apparatus with each other without manually retrieving the apparatus specifying information of the electronic apparatus. Consequently, the user can be released from a burden when associating the portable terminal and the electronic apparatus with each other.

In the aforementioned portable terminal-electronic apparatus associating method according to the second aspect, the step of associating the portable terminal and the electronic apparatus with each other preferably includes a step of enabling the user to operate the electronic apparatus with the portable terminal. According to this structure, the user can be released from a burden when implementing an operation of the electronic apparatus with the portable terminal body portion.

In the aforementioned portable terminal-electronic apparatus associating method according to the second aspect, the step of associating the portable terminal and the electronic apparatus with each other preferably includes a step of enabling the user to receive the same contents as contents received from a contents server distributing contents via the network with the portable terminal through the portable telephone network with the electronic apparatus. If the user must be authenticated by the contents server in order to receive contents and is authenticated only on the side of the portable terminal, he/she must be newly authenticated for receiving the contents on the side of the electronic apparatus, in order to receive the contents with the electronic apparatus. According to the present invention, on the other hand, the user so associates the portable terminal body portion and the electronic apparatus with each other that he/she can receive the contents with the electronic apparatus without being newly authenticated for receiving the contents on the side of the electronic apparatus.

In the aforementioned portable terminal-electronic apparatus associating method according to the second aspect, the step of associating the portable terminal and the electronic apparatus with each other preferably includes a step of enabling the user to pay for a product purchased or a service utilized with the electronic apparatus through the network with the portable terminal. If the user can pay for the product purchased or the service utilized with the electronic apparatus only with the electronic apparatus, he/she must make the payment with the electronic apparatus employed for purchasing the product or utilizing the service. According to the present invention, on the other hand, the user so associates the portable terminal body portion and the electronic apparatus with each other that he/she can make the payment with the portable terminal without using the electronic apparatus employed for purchasing the product or utilizing the service.

In the aforementioned portable terminal-electronic apparatus associating method according to the second aspect, the step of associating the portable terminal and the electronic apparatus with each other preferably includes a step of associating the portable terminal and a television set as the electronic apparatus with each other on the basis of the apparatus specifying information acquired with the portable terminal. According to this structure, the user can be released from a burden when associating the portable terminal and the television set as the electronic apparatus with each other.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates the structure of a smartphone-television set associating system according to a first embodiment of the present invention;
Fig. 2 is a block diagram showing the structure of a smartphone according to each of the first embodiment and second and third embodiments of the present invention;
Fig. 3 is a flow chart showing processing of associating a smartphone body portion and a television set with each other in the smartphone-television set associating system according to the first embodiment of the present invention;
Fig. 4 illustrates apparatus specifying information and terminal specifying information employed for the processing of associating the smartphone body portion and the television set with each other in each of the smartphone-television set associating system according to the first embodiment of the present invention and smartphone-television set associating systems according to the second and third embodiments of the present invention;
Fig. 5 illustrates the structure of the smartphone-television set associating system according to the second embodiment of the present invention;
Fig. 6 is a flow chart showing processing for receiving a video in the smartphone-television set associating system according to the second embodiment of the present invention;
Fig. 7 illustrates the structure of the smartphone-television set associating system according to the third embodiment of the present invention; and
Fig. 8 is a flow chart showing processing for payment in the smartphone-television set associating system according to the third embodiment of the present invention.

### DESCRIPTION OF THE PREFERRED EMBODIMENTS

Embodiments of the present invention are now described with reference to the accompanying drawings.

### (First Embodiment)

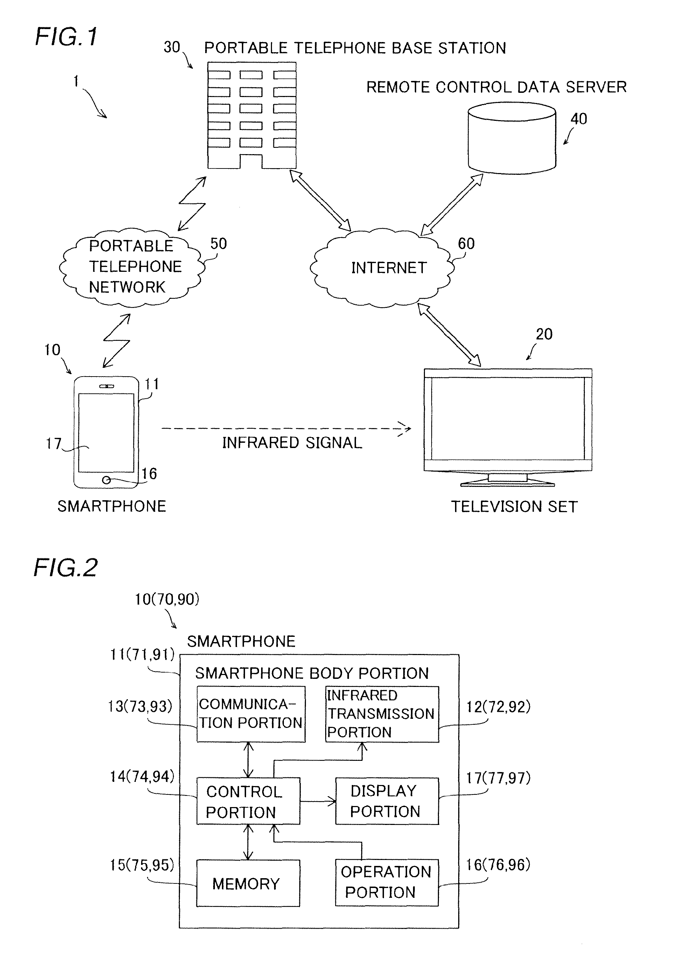

The structure of a smartphone-television set associating systems according to a first embodiment of the present invention is described with reference to Figs. 1 to 4. The smartphone-television set associating system 1 is an example of the "portable terminal-electronic apparatus associating system" in the present invention.

The smartphone-television set associating system 1 according to the first embodiment of the present invention is constituted of a smartphone 10 and a television set 20, as shown in Fig. 1. The smartphone 10 is an example of the "portable terminal" in the present invention. The television set 20 is an example of the "electronic apparatus" in the present invention.

The smartphone 10 is connected to a portable telephone network 50, and formed to be capable of communicating with a portable telephone base station 30 through the portable telephone network 50. The smartphone 10 is further formed to be capable of transmitting an infrared signal to the television set 20. The television set 20 is connected to the Internet 60, and formed to be capable of communicating with the portable telephone base station 30 and a remote control data server 40 through the Internet 60. The remote control data server 40 is a server storing a database indicating a list of data formats (information related to operations of electronic apparatuses) of remote control signals corresponding to all electronic apparatuses including the television set 20 respectively. The remote control signals denote operation signals (infrared signals) including operation instructions to the electronic apparatuses. The Internet 60 is an example of the "network" in the present invention. The remote control data server 40 is an example of the "operation information server" in the present invention. Communication performed in the smartphone-television set associating system 1 may be entirely encrypted.

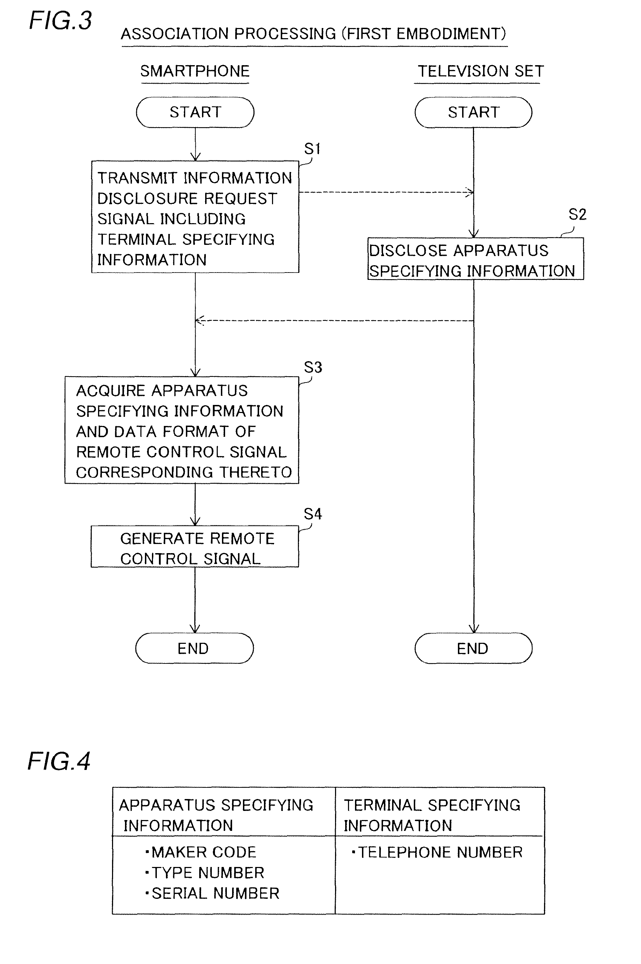

The structure of the smartphone 10 according to the first embodiment of the present invention is now described with reference to Figs. 2 and 4.

The smartphone 10 according to the first embodiment of the present invention is constituted of a smartphone body portion 11, an infrared transmission portion 12, a communication portion 13, a control portion 15, a memory 15, an operation portion 16 and a display portion 17, as shown in Fig. 2. The smartphone body portion 11 is an example of the "portable terminal body portion" in the present invention. The infrared transmission portion 12 is an example of the "transmission portion" in the present invention.

The infrared transmission portion 12 is formed to be capable of transmitting the infrared signal. The communication portion 13 is formed to be connectable to the internet 60 through the portable telephone network 50 (see Fig. 1) and the portable telephone base station 30. The control portion 14 is formed to control the overall smartphone 10 in response to an operation of the user on the operation portion 16. The display portion 17 is formed to be capable of displaying/playing back contents such as videos.

According to the first embodiment, the infrared transmission portion 12 is formed to be capable of transmitting an information disclosure request signal (infrared signal) for making the television set 20 disclose apparatus specifying information (see Fig. 4) for specifying the same on the Internet 60 to the television set 20 (see Fig. 1) connected to the Internet 60. The information disclosure request signal is formed to include terminal specifying information (see Fig. 4) for specifying the smartphone body portion 11.

The apparatus specifying information is information specifically given to each of all electronic apparatuses including the television set 20. For example, the apparatus specifying information includes a maker code, a type number and a serial number, as shown in Fig. 4. On the other hand, the terminal specifying information is information specifically given to each of all portable terminal including the smartphone 10 (smartphone body portion 11). For example, the terminal specifying information includes a telephone number, as shown in Fig. 4.

The communication portion 13 is formed to acquire the apparatus specifying information disclosed on the Internet 60 by the television set 20 receiving the information disclosure request signal when the infrared transmission portion 12 transmits the information disclosure request signal to the television set 20. Further, the communication portion 13 is formed to also acquire information (data format of the corresponding remote control signal) related to an operation on the electronic apparatus (television set 20) corresponding to the apparatus specifying information when acquiring the apparatus specifying information.

The control portion 14 is formed to associate the smartphone body portion 11 and the television set 20 with each other on the basis of the acquired apparatus specifying information of the television set 20 when the communication portion 13 acquires the apparatus specifying information. More specifically, the control portion 14 is formed to generate the remote control signal for operating the television set 20 on the basis of the apparatus specifying information of the television set 20 acquired by the communication portion 13 and the data format of the remote control signal for the television set 20 acquired by the communication portion 13 from the remote control data server 40.

Thus, according to the first embodiment, the user can operate the television set 20 with the smartphone body portion 11 when the control portion 14 associates the smartphone body portion 11 and the television set 20 with each other. In other words, the user can use the smartphone 10 as a remote control for the television set 20 when the control portion 14 associates the smartphone body portion 11 and the television set 20 with each other in the first embodiment.

Processing of associating the smartphone body portion 11 and the television set 20 with each other in the smartphone-television set associating system 1 according to the first embodiment of the present invention is now described with reference to Fig. 3.

First, the control portion 14 of the smartphone 10 transmits the information disclosure request signal including the terminal specifying information (see Fig. 4) of the smartphone 10 to the television set 20 through the infrared transmission portion 12 at a step S1, as shown in Fig. 3.

Then, the television set 20 transmits the terminal specifying information included in the information disclosure request signal received from the smartphone 10 and the apparatus specifying information of the television set 20 to the remote control data server 40 (see Fig. 1) through the internet 60 at a step S2. Thus, the apparatus specifying information (see Fig. 4) of the television set 20 is disclosed to the remote control data server 40.

Then, the remote control data server 40 extracts the data format of the remote control signal corresponding to the apparatus specifying information received from the television set 20 from among the data formats of all remote control signals stored therein. Then, the remote control data server 40 transmits the apparatus specifying information of the television set 20, the data format of the remote control signal corresponding thereto and the terminal specifying information to the portable telephone base station 30 through the Internet 60. Then, the portable telephone base station 30 transmits the apparatus specifying information of the television set 20 and the data format of the remote control signal corresponding thereto to the smartphone 10 through the portable telephone network 50.

Then, the control portion 14 of the smartphone 10 controls the communication portion 13 to acquire the apparatus specifying information of the television set 20 an the data format of the remote control signal corresponding thereto from the portable telephone base station 30 through the portable telephone network 50 at a step S3. Then, the control portion 14 generates the remote control signal for turning on the power for the television set 20 or the like on the basis of the apparatus specifying information of the television set 20 acquired by the communication portion 14 and the data format of the remote control signal corresponding thereto at a step S4.

When the control portion 14 associates the smartphone body portion 11 and the television set 20 with each other through the aforementioned steps S1 to S4, the user can use the smartphone 10 as a remote control for the television set 20. In this case, it follows that both of the smartphone 10 and the television set 20 acquire the terminal specifying information of the smartphone 10 and the apparatus specifying information of the television set 20. In this case, the state where the smartphone body portion 11 and the television set 20 are associated with each other does not last long, but disappears after a lapse of a constant period (one week, for example).

According to the first embodiment, as hereinabove described, the smartphone 10 is provided with the infrared transmission portion 12 capable of transmitting the information disclosure request signal for making the television set 20 disclose the apparatus specifying information (see Fig. 4), the communication portion 13 formed to be capable of acquiring the apparatus specifying information disclosed by the television set 20 and the control portion 14 associating the smartphone body portion 11 and the television set 20 with each other on the basis of the apparatus specifying information acquired by the communication portion 13. Thus, the communication portion 13 acquires the apparatus specifying information of the television set 20 when the transmission portion 13 transmits the information disclosure request signal to the television set 20 on the basis of a transmission operation (on the operation portion 16) performed by the user, whereby the control portion 14 can associate the smartphone body portion 11 and the television set 20 with each other without requiring the user to manually retrieve the apparatus specifying information of the television set 20. Consequently, the user can be released from a burden when the control portion 14 associates the smartphone body portion 11 and the television set 20 with each other.

According to the first embodiment, as hereinabove described, the smartphone-television set associating system 1 is so formed that the user can operate the television set 20 with the smartphone body portion 11 when the control portion 14 associates the smartphone body portion 11 and the television set 20 with each other. Thus, the user can be released from a burden when implementing an operation of television set 20 with the smartphone body portion 11.

According to the first embodiment, as hereinabove described, the communication portion 13 is formed to also acquire the data format (information related to operations) of the remote control signal for operating the television set 20 corresponding to the apparatus specifying information when acquiring the apparatus specifying information, and the control portion 14 is formed to generate the remote control signal for operating the television set 20 on the basis of the apparatus specifying information acquired by the communication portion 13 and the data format of the remote control signal for operating the television set 20 corresponding to the apparatus specifying information. Thus, the control portion 14 can easily generate the remote control signal for operating the television set 20 on the basis of the apparatus specifying information acquired by the communication portion 13 and the data format of the remote control signal for the television set 20 corresponding to the apparatus specifying information.

According to the first embodiment, as hereinabove described, the communication portion 13 is connected to the remote control data server 40 storing the database associating the apparatus specifying information and the information (data formats of the remote control signals for operating all electronic apparatuses including the television set 20) related to operations on the electronic apparatuses with each other through the portable telephone network 50. Thus, the communication portion 13 can easily acquire the apparatus specifying information and the information (data format of the remote control signal for operating the television set 20, for example) related to operations on the electronic apparatus corresponding to the apparatus specifying information from the remote control data server 40.

According to the first embodiment, as hereinabove described, the information disclosure request signal is formed to include the terminal specifying information for specifying the smartphone body portion 11 (smartphone 10). Thus, the television set 20 can easily disclose the apparatus specifying information on the Internet 60 toward the smartphone body portion 11 specified by the terminal specifying information included in the information disclosure request signal. Further, the smartphone 10 can easily acquire the apparatus specifying information disclosed by the television set 20 on the Internet 60 through the communication portion 13. Consequently, the control portion 14 can easily associate the smartphone body portion 11 and the television set 20 with each other.

### (Second Embodiment)

A second embodiment of the present invention is now described with reference to Figs. 2, 5 and 6. According to the second embodiment, terminal specifying information transmitted from a smartphone 70 to a television set 20 when a control portion 74 associates a smartphone body portion 71 and the television set 20 with each other includes prescribed authentication information.

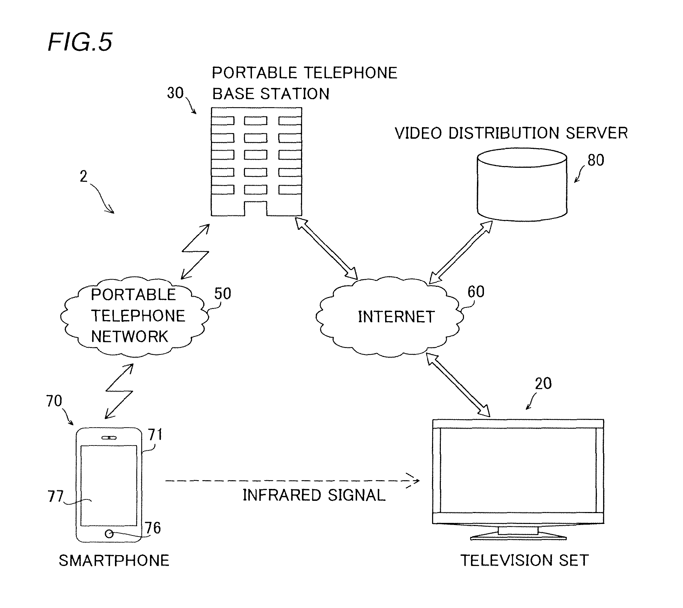

First, the structure of a smartphone-television set associating system 2 according to the second embodiment of the present invention is described with reference to Fig. 5. The smartphone-television set associating system 2 is an example of the "portable terminal-electronic apparatus associating system" in the present invention.

The smartphone-television set associating system 2 according to the second embodiment of the present invention is constituted of the smartphone 70 and the television set 20, as shown in Fig. 5. The smartphone 70 is an example of the "portable terminal" in the present invention.

The smartphone 70 is formed to be capable of communicating with a video distribution server 80 through a portable telephone network 50, a portable telephone base station 30 and the Internet 60. The television set 20 is formed to be capable of communicating with the video distribution server 80 through the Internet 60. The smartphone 70 and the television set 20 are formed to be capable of receiving videos (contents) distributed by the video distribution server 80. The video distribution server 80 is an example of the "contents server" in the present invention.

The video distribution server 80 is a server distributing videos through the Internet 60. It is assumed that the user must log in to the video distribution server 80 with prescribed authentication information, in order to receive any video distributed by the video distribution server 80. The prescribed authentication information corresponds to a user ID or a password issued when the user purchases a video from a trader running the video distribution server 80, for example.

The structure of the smartphone 70 according to the second embodiment of the present invention is now described with reference to Fig. 2.

The smartphone 70 according to the second embodiment of the present invention is constituted of the smartphone body portion 71, an infrared transmission portion 72, a communication portion 73, the control portion 74, a memory 75, an operation portion 76 and a display portion 77, as shown in Fig. 2. The smartphone body portion 71 is an example of the "portable terminal body portion" in the present invention. The infrared transmission portion 72 is an example of the "transmission portion" in the present invention.

The infrared transmission portion 72 is formed to be capable of transmitting an infrared signal. The communication portion 73 is connected to a video distribution server 80 through the portable telephone network 50, the portable telephone base station 30 and the Internet 60, and formed to be capable of receiving any video distributed by the video distribution server 80. The display portion 77 is formed to be capable of displaying/playing back the video received by the communication portion 73. The control portion 74 is formed to control the overall smartphone 70 in response to an operation of the user on the operation portion 76.

According to the second embodiment, the infrared transmission portion 72 is formed to be capable of transmitting an information disclosure request signal (infrared signal) for making the television set 20 disclose apparatus specifying information (see Fig. 4) for specifying the same on the Internet 60 to the television set 20. The information disclosure request signal is formed to include terminal specifying information (see Fig. 4) for specifying the smartphone body portion 71. When the video distribution server 80 issues prescribed authentication information to the user possessing the smartphone 70 in the second embodiment, the terminal specifying information in the information disclosure request signal transmitted by the infrared transmission portion 72 is formed to include the prescribed authentication information. In other words, the infrared transmission portion 72 is formed to also transmit the prescribed authentication information necessary for receiving any video from the video distribution server 80 to the television set 20 when transmitting the information disclosure request signal to the television set 20 in the second embodiment.

According to the second embodiment, the smartphone-television set associating system 2 is so formed that the television set 20 can receive the same video as that received by the communication portion 73 when the control portion 74 associates the smartphone body portion 71 and the television set 20 with each other. It is assumed that the control portion 74 associates the smartphone body portion 71 and the television set 20 with each other in the second embodiment similarly to the control portion 13 associating the smartphone body portion 11 and the television set 20 with each other in the aforementioned first embodiment. Thus, it follows that the television set 20 acquires the terminal specifying information (prescribed authentication information) of the smartphone body portion 71 when the control portion 74 associates the smartphone body portion 71 and the television set 20 with each other in the state where the video distribution server 80 issues the prescribed authentication information to the user possessing the smartphone 70.

The remaining structure of the second embodiment is similar to that of the aforementioned first embodiment.

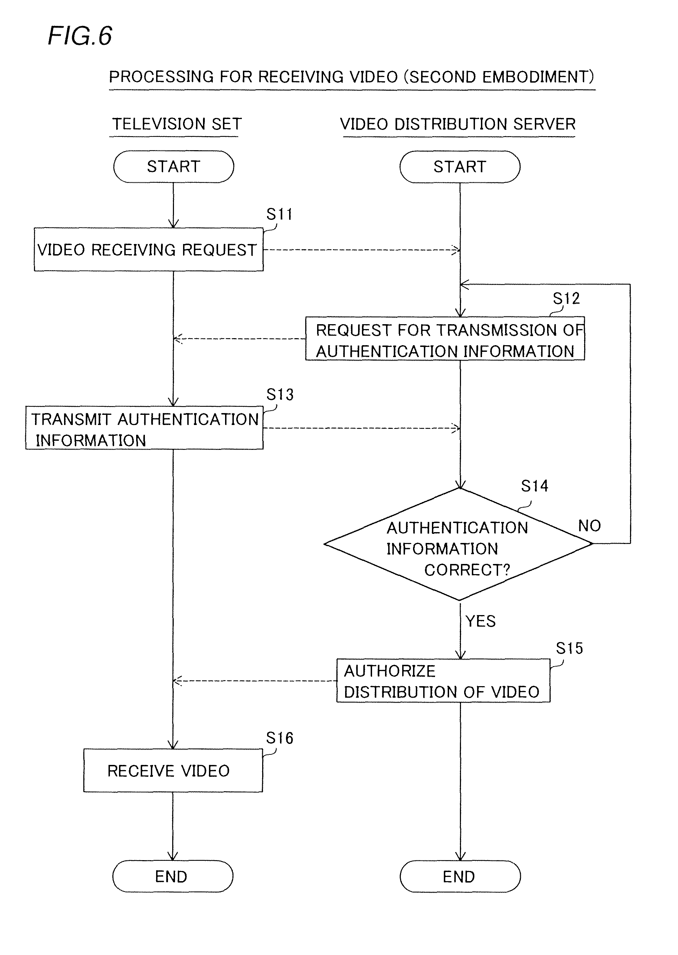

Processing for receiving a video in the smartphone-television set associating system 2 according to the second embodiment of the present invention is now described with reference to Fig. 6.

First, the television set 20 transmits such a video receiving request that the user wishes to receive a video in a state receivable by the smartphone 70 (to which the authentication information has been issued by the video distribution server 80) on the side of the television set 20 to the video distribution server 80 through the Internet 60 at a step S11, as shown in Fig. 6.

Then, the video distribution server 80 transmits a request for transmission of the authentication information necessary for receiving the video to be received through the video receiving request transmitted at the step S11 to the television set 20 at a step S12.

Then, the television set 20 transmits the authentication information necessary for receiving the video to be received through the video receiving request transmitted at the step S11 to the video distribution server 80 at a step S13. If the control portion 74 has already associated the smartphone body portion 71 and the television set 20 with each other, the television set 20 transmits the authentication information acquired in the association processing to the video distribution server 80 at the step S13.

Then, the video distribution server 80 determines whether or not the authentication information received from the television set 20 at the step S13 is correct at a step S14. If determining that the authentication information received from the televisions set 20 is not correct at the step S14, the video distribution server 80 returns to the step S12. If determining that the authentication information received from the television set 20 is correct at the step S14, on the other hand, the video distribution server 80 advances to a step S15. Then, the video distribution server 80 authorizes distribution of the video to the television set 20 at the step S15, so that the television set 20 advances to a step S16.

Then, the television set 20 receives the video, authorized to be distributed by the video distribution server 80 at the step S15, at the step S16. Thus, the processing is terminated. Through the aforementioned steps S11 to S16, the television set 20 can also receive the video in the state receivable by the smartphone 70.

According to the second embodiment, as hereinabove described, the communication portion 73 is connected to the video distribution server 80 distributing videos via the Internet 60 through the portable telephone network 50 and formed to receive any video from the video distribution server 80, while the smartphone-television set associating system 2 is so formed that the television set 20 can receive the same video as that received by the communication portion 73 when the control portion 74 associates the smartphone body portion 71 and the television set 20 with each other. If the user must be authenticated by the video distribution server 80 in order to receive any video and is authenticated to receive the video only on the side of the smartphone 10, he/she must be newly authenticated for receiving the video on the side of the television set 20, in order to receive the video with the television set 20. According to the second embodiment, on the other hand, the control portion 74 so associates the smartphone body portion 71 and the television set 20 with each other that the user can receive the video with the television set 20 without being newly authenticated to receive the video on the side of the television set 20.

According to the second embodiment, as hereinabove described, the infrared communication portion 72 is formed to also transmit the prescribed authentication information necessary for receiving the video from the video distribution server 80 to the television set 20 when transmitting the information disclosure request signal to the television set 20. Thus, the television set 20 can easily receive the video from the video distribution server 80 with the prescribed authentication information received from the smartphone 70.

The remaining effects of the second embodiment are similar to those of the aforementioned first embodiment.

### (Third Embodiment)

A third embodiment of the present invention is now described with reference to Figs. 2, 7 and 8. According to the third embodiment, terminal specifying information disclosed by a television set 20 when a control portion 94 associates a smartphone body portion 91 and the television set 20 with each other includes prescribed payment information.

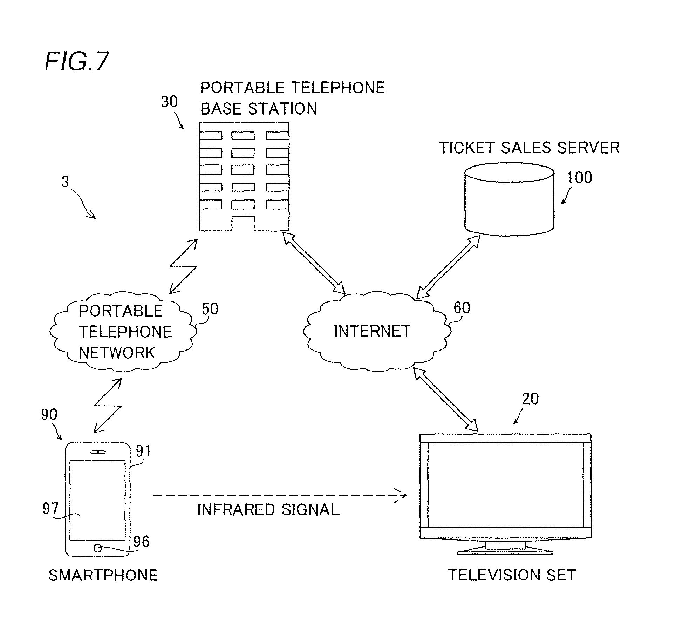

First, the structure of a smartphone-television set associating system 3 according to the third embodiment of the present invention is described with reference to Fig. 7. The smartphone-television set associating system 3 is an example of the "portable terminal-electronic apparatus associating system" in the present invention.

The smartphone-television set associating system 3 according to the third embodiment of the present invention is constituted of a smartphone 90 and the television set 20, as shown in Fig. 7. The smartphone 90 is an example of the "portable terminal" in the present invention.

The smartphone 90 is formed to be capable of communicating with a ticket sales server 100 through a portable telephone network 50, a portable telephone base station 30 and the Internet 60. The television set 20 is formed to be capable of communicating with the ticket sales server 100 through the Internet 60.

The ticket sales server 100 is a server selling tickets for concerts or the like through the Internet 60. It is assumed that, when any person purchases a ticket from the ticket sales server 100, a trader running the ticket sales server 100 issues prescribed payment information to the purchaser. It is also assumed that the purchaser must pay for the ticket with the prescribed payment information. The prescribed payment information includes the price of the purchased ticket, a purchaser number etc., for example.

The structure of the smartphone 90 according to the third embodiment of the present invention is now described with reference to Fig. 2.

The smartphone 90 according to the third embodiment of the present invention is constituted of the smartphone body portion 91, an infrared transmission portion 92, a communication portion 93, the control portion 94, a memory 95, an operation portion 96 and a display portion 97, as shown in Fig. 2. The smartphone body portion 91 is an example of the "portable terminal body portion" in the present invention. The infrared transmission portion 92 is an example of the "transmission portion" in the present invention.

The infrared transmission portion 92 is formed to be capable of transmitting an infrared signal. The communication portion 93 is connected to the ticket sales server 100 through the portable telephone network 50, the portable telephone base station 30 and the Internet 60. The control portion 94 is formed to control the overall smartphone 90 in response to an operation of the user on the operation portion 96.

According to the third embodiment, the smartphone-television set associating system 3 is so formed that, when the user purchases any ticket from the ticket sales server 100, the control portion 94 controls the display portion 97 to display a payment screen for paying for the purchased ticket. When the display portion 97 displays the payment screen, the control portion 94 accepts the aforementioned prescribed payment information, a credit card number etc. input by the purchaser. Then, the control portion 94 controls the smartphone 90 to transmit the prescribed payment information, the credit card number etc. input by the purchaser to the ticket sales server 100 through the communication portion 93. Thus, the user pays for the purchased ticket. The user inputs the payment information, the credit card number etc. by operating the operation portion 96. The control portion 94 is an example of the "payment means" in the present invention.

According to the third embodiment, the infrared transmission portion 92 is formed to be capable of transmitting an information disclosure request signal (infrared signal) for making the television set 20 disclose apparatus specifying information (see Fig. 4) for specifying the same on the Internet 60 to the television set 20. When the ticket sales server 100 issues the prescribed payment information to the user possessing the television set 20, the apparatus specifying information disclosed by the television set 20 is formed to include the prescribed payment information. In other words, the communication portion 93 also acquires the prescribed payment information related to payment for a product purchased or a service utilized by the user with the television set 20 through the Internet 60 when acquiring the apparatus specifying information of the television set 20 as described later in the third embodiment.

According to the third embodiment, the smartphone-television set associating system 3 is so formed that the user can pay for the ticket he/she has purchased with the television set 20 through the Internet 60 with a payment means (control portion 94) when the control portion 94 associates the smartphone body portion 91 and the television set 20 with each other. It is assumed that the control portion 94 associates the smartphone body portion 91 and the television set 20 with each other similarly to the control portion 13 associating the smartphone body portion 11 and the television set 20 with each other in the aforementioned first embodiment. Thus, it follows that the smartphone 90 acquires the apparatus specifying information (prescribed payment information) of the television set 20 when the control portion 94 associates the smartphone body portion 91 and the television set 20 with each other in the state where the ticket sales server 100 issues the prescribed payment information to the user possessing the television set 20.

The remaining structure of the third embodiment is similar to that of the aforementioned first embodiment.

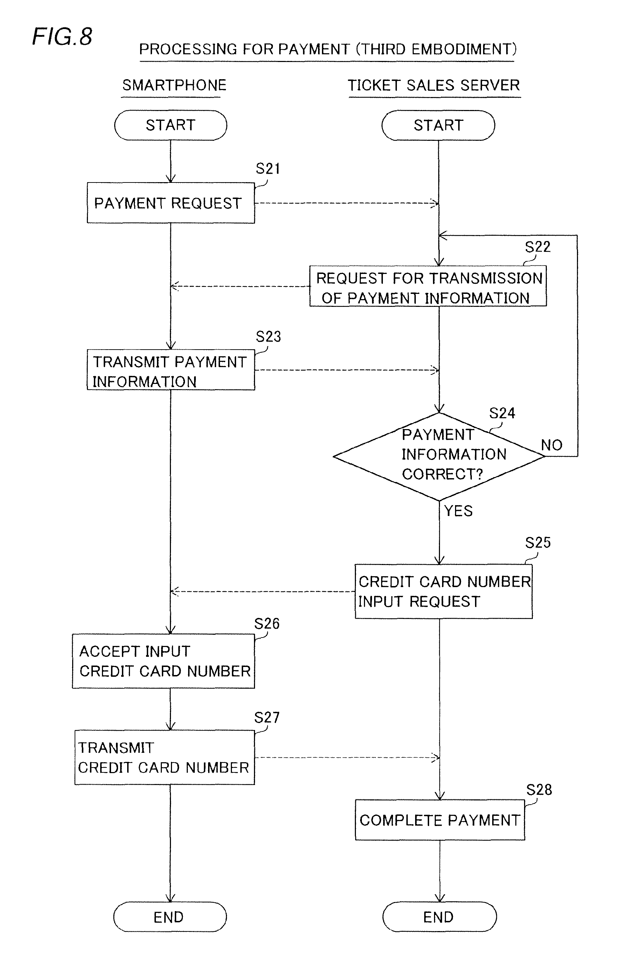

Processing for payment in the smartphone-television set associating system 3 according to the third embodiment of the present invention is now described with reference to Fig. 8.

First, the control portion 94 of the smartphone 90 transmits such a payment request that the user wishes to pay for the ticket purchased with the television set 20 on the side of the smartphone 90 to the ticket sales server 100 through the communication portion 93 at a step S21, as shown in Fig. 8.

Then, the ticket sales server 100 transmits a request for transmission of the payment information necessary for the payment to be made through the payment request transmitted at the step S21 to the smartphone 90 at a step S22, so that the control portion 94 advances to a step S23.

Then, the control portion 94 of the smartphone 90 transmits the payment information necessary for the payment to be made through the payment request transmitted at the step S21 to the ticket sales server 100 through the communication portion 93 at the step S23. If the control portion 94 has already associated the smartphone body portion 91 and the television set 20 with each other, the control portion 94 transmits the payment information included in the apparatus specifying information disclosed by the television set 20 in the association processing to the ticket sales server 100 at the step S23. Then, the ticket sales server 100 advances to a step S24.

Then, the ticket sales server 100 determines whether or not the payment information received from the smartphone 90 at the step S23 is correct at the step S24. If determining that the payment information received from the smartphone 90 is not correct at the step S24, the ticket sales server 100 returns to the step S22. If determining that the payment information received from the smartphone 90 is correct at the step S24, on the other hand, the ticket sales server 100 advances to a step S25. Then, the ticket sales server 100 transmits a credit card number input request to the smart phone 90 at the step S25, so that the control portion 94 advances to a step S26.

Then, the user possessing the smartphone 90 inputs the credit card number so that the control portion 94 accepts the input credit card number at the step S26. Then, the control portion 94 transmits the accepted credit card number to the ticket sales server 100 through the communication portion 93 at a step S27.

Then, the ticket sales server 100 completes the payment and terminates the processing at a step S28. Through the aforementioned steps S21 to S28, the user can pay for the ticket purchased with the television set 20 on the side of the smartphone 90.

According to the third embodiment, as hereinabove described, the smartphone 9C is provided with the communication portion 93 for making payment through the Internet 60, the operation portion 96 and the display portion 97, and the smartphone-television set associating system 3 is so formed that the user can pay for the ticket purchased with the television set 20 through the Internet 60 with the communication portion 93, the operation portion 96 and the display portion 97 when the control portion 94 associates the smartphone body portion 91 and the television set 20 with each other. If the user can pay for the ticket purchased with the television set 20 only with the television set 20, he/she must make the payment with the television set 20 employed for purchasing the ticket. According to the third embodiment, on the other hand, the control portion 94 so associates the smartphone body portion 91 and the television set 20 with each other that the user can pay for the ticket purchased with the television set 20 by employing the smartphone 90.

According to the third embodiment, as hereinabove described, the communication portion 93 is formed to also acquire the prescribed payment information related to the payment for the product purchased or the service utilized by the user with the television set 20 through the Internet 60 when acquiring the apparatus specifying information. Thus, the smartphone 90 can easily pay for the product purchased or the service utilized by the user with the television set 20 through the Internet 60 by employing the prescribed payment information acquired from the television set 20.

The remaining effects of the third embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the smartphone is employed as the portable terminal in the present invention and the television set is employed as the electronic apparatus in the present invention in each of the aforementioned first to third embodiments, the present invention is not restricted to this. According to the present invention, a portable terminal other than the smartphone may alternatively be employed as the portable terminal, and an electronic apparatus other than the television set may alternatively be employed as the electronic apparatus.

While the smartphone generates the remote control signal for the television set through the data format of the remote control signal stored in the remote control data server in the aforementioned first embodiment, the present invention is not restricted to this. According to the present invention, the smartphone may alternatively generate the remote control signal for the television set without through the remote control data server. In this case, the memory of the smartphone must store the data formats of the remote control signals corresponding to all electronic apparatuses including the television set respectively while the smartphone may not utilize the remote control data server when generating the remote control signal for the television set, whereby the smartphone can easily generate the remote control signal for the television set.

While the video distribution server distributing videos is employed as the contents server in the present invention in the aforementioned second embodiment, the present invention is not restricted to this. According to the present invention, an electronic book server distributing electronic books may alternatively be employed as the contents server, for example.

While the smartphone makes the payment for the product (ticket) purchased by the user with the television set through the Internet in the aforementioned third embodiment, the present invention is not restricted to this. According to the present invention, the smartphone (portable terminal) may alternatively make payment for a service utilized by the user with the television set through the Internet.

## Claims

1. A portable terminal (10, 70, 90) comprising:
a portable terminal body portion (11, 71, 91);
a transmission portion (12, 72, 92)capable of transmitting an information disclosure request signal for making an electronic apparatus (20) connected to a network (60) disclose apparatus specifying information for specifying said electronic apparatus on said network to said electronic apparatus;
a communication portion (13, 73, 93) formed to be connectable to said network through a portable telephone network (50) and formed to be capable of acquiring said apparatus specifying information disclosed by said electronic apparatus; and
a control portion (14, 74, 94) associating said portable terminal body portion and said electronic apparatus with each other on the basis of said apparatus specifying information acquired by said communication portion.

2. The portable terminal according to claim 1, so formed that the user can operate said electronic apparatus with said portable terminal body portion when said control portion associates said portable terminal body portion and said electronic apparatus with each other.

3. The portable terminal according to claim 2, wherein
said control portion is formed to generate an operation signal including an operation instruction to said electronic apparatus corresponding to said apparatus specifying information on the basis of said apparatus specifying information acquired by said communication portion.

4. The portable terminal according to claim 3, wherein
said communication portion is formed to also acquire information related to an operation on said electronic apparatus corresponding to said apparatus specifying information when acquiring said apparatus specifying information, and
said control portion is formed to generate said operation signal for said electronic apparatus corresponding to said apparatus specifying information on the basis of said apparatus specifying information acquired by said communication portion and said information related to said operation on said electronic apparatus corresponding to said apparatus specifying information.

5. The portable terminal according to claim 4, wherein
said communication portion is connected to an operation information server (40) storing a database for associating said apparatus specifying information and said information related to said operation on said electronic apparatus with each other.

6. The portable terminal according to claim 1, wherein
said communication portion is connected to a contents server (80) distributing contents via said network through said portable telephone network and formed to receive said contents from said contents server, and
the portable terminal is so formed that said electronic apparatus can receive the same contents as said contents received by said communication portion when said control portion associates said portable terminal body portion and said electronic apparatus with each other.

7. The portable terminal according to claim 6, wherein
said transmission portion is formed to also transmit prescribed authentication information necessary for receiving said contents from said contents server to said electronic apparatus when transmitting said information disclosure request signal to said electronic apparatus.

8. The portable terminal according to claim 1, further comprising a payment means (94) for making payment through said network, and
so formed that the user can pay for a product purchased or a service utilized with said electronic apparatus through said network with said payment means when said control portion associates said portable terminal body portion and said electronic apparatus with each other.

9. The portable terminal according to claim 8, wherein
said communication portion is formed to also acquire prescribed payment information related to payment for said product purchased or said service utilized with said electronic apparatus through said network when acquiring said apparatus specifying information.

10. The portable terminal according to claim 1, wherein
said information disclosure request signal includes terminal specifying information for specifying said portable terminal body portion.

11. A portable terminal-electronic apparatus associating method comprising the steps of:
transmitting an information disclosure request signal for making an electronic apparatus (20) connected to a network (60) disclose apparatus specifying information for specifying said electronic apparatus on said network to said electronic apparatus with a portable terminal (10, 70, 90);
acquiring said apparatus specifying information disclosed by said electronic apparatus with said portable terminal through said network and a portable telephone network (50); and
associating said portable terminal and said electronic apparatus with each other on the basis of said apparatus specifying information acquired with said portable terminal.

12. The portable terminal-electronic apparatus associating method according to claim 11, wherein
the step of associating said portable terminal and said electronic apparatus with each other includes a step of enabling the user to operate said electronic apparatus with said portable terminal.

13. The portable terminal-electronic apparatus associating method according to claim 11, wherein
the step of associating said portable terminal and said electronic apparatus with each other includes a step of enabling the user to receive the same contents as contents received from a contents server (80) distributing contents via said network with said portable terminal through said portable telephone network with said electronic apparatus.

14. The portable terminal-electronic apparatus associating method according to claim 11, wherein
the step of associating said portable terminal and said electronic apparatus with each other includes a step of enabling the user to pay for a product purchased or a service utilized with said electronic apparatus through said network with said portable terminal.

15. The portable terminal-electronic apparatus associating method according to claim 11, wherein
the step of associating said portable terminal and said electronic apparatus with each other includes a step of associating said portable terminal and a television set (20) as said electronic apparatus with each other on the basis of said apparatus specifying information acquired with said portable terminal.
